# EUROPEAN PATENT APPLICATION

(11) **EP 2 769 893 A1**
(43) Date of publication of application: **27.08.2014**
(21) Application number: 11874371.5
(22) Date of filing: 20.10.2011
(51) Int. Cl.: B60W 10/06, B60K 6/48, B60W 10/02, B60W 20/00

(54) **ENGINE START CONTROL APPARATUS FOR HYBRID VEHICLE**

(71) Applicant: Toyota Jidosha Kabushiki Kaisha, Toyota-shi, Aichi 471-8571 (JP)
(72) Inventor: NAKANISHI, Naoki, Toyota-shi, Aichi 471-8571 (JP); KATO, Yasuyuki, Toyota-shi, Aichi 471-8571 (JP); IDESHIO, Yukihiko, Toyota-shi, Aichi 471-8571 (JP); KOJIMA, Susumu, Toyota-shi, Aichi 471-8571 (JP)
(74) Representative: Albutt, Anthony John
(86) International application number: PCT/JP2011/074126
(87) International publication number: WO 2013/057817

(57) **Abstract**

When a K0 clutch (34) is connected after a direct-injection engine (12) is ignition-started, as an engine rotation speed (NE) approaches a MG rotation speed (NMG), engine torque (TE) is decreased in proportion to a speed difference (NMG-NE), and a substantially constant engine rotation speed (NE) is maintained when the speed difference (NMG-NE) is substantially zero. Thus, overshoot of the direct-injection engine (12) or connecting shock can be suppressed regardless of any error in connection timing for the K0 clutch (34), so that improved drivability or ride can be obtained. Further, because the engine torque (TE) is gradually decreased in accordance with the speed difference (NMG-NE), stalling or the like due to the loss of independent rotation capability of the direct-injection engine (12) can be appropriately prevented compared to the case where the engine torque (TE) is decreased uniformly regardless of changes in the speed difference (NMG-NE).

## Description

### TECHNICAL FIELD

The present invention relates to control at the time of engine start of a hybrid vehicle including a direct injection engine.

### BACKGROUND ART

A hybrid vehicle is known that has (a) a direct injection engine directly injecting fuel into a cylinder, (b) a clutch connecting/disconnecting the direct injection engine to/from a power transmission path, and (c) a rotating machine acting at least as an electric motor and (d) that is capable of running by concurrently or separately using the direct injection engine and the rotating machine as a drive force source and capable of ignition start in which the direct injection engine is started by injecting and igniting fuel in any cylinder during stop of the direct injection engine. A hybrid vehicle described in Patent Document 1 is an example thereof and, during motor running in which only the rotating machine is used as the drive force source for running, a friction clutch is connected (frictionally engaged) to rotate a crankshaft of the direct injection engine and adjust a crank angle of a cylinder in an expansion stroke into a predetermined range so that fuel is injected and ignited in the cylinder in the expansion stroke at an engine start in the described technique of ignition start. When an engine rotation speed is increased by the ignition start and becomes substantially the same as (synchronizes with) a rotation speed of the rotating machine, the clutch is connected to replace a motor torque with an engine torque.

Although the engine can start by itself only through the ignition start in some cases such as when friction of the direct injection engine is small, the clutch can be connected at the engine start to give assistance (torque compensation) from the rotating machine as needed, and an assist torque can significantly be reduced by the ignition start. As a result, a maximum torque of the rotating machine can be reduced to achieve smaller size and lower fuel consumption.

### PRIOR ART DOCUMENT

### Patent Document

Patent Document 1: Japanese Unexamined Patent Application Publication (Translation of PCT Application) No. 2009-527411

### SUMMARY OF THE INVENTION

### Problem to Be Solved by the Invention

However, if the clutch is connected when the engine rotation speed is increased by the ignition start and substantially synchronizes with the rotation speed of the rotating machine as described above, the engine may race up due to deviation of a connection timing and a connection shock (drive force variation) may occur due to engine rotation speed variation etc., associated with subsequent engagement of the clutch, resulting in deterioration of drivability performance or riding quality. In the case of the ignition start, the clutch is released or in slip-engagement with a relatively small engagement torque for obtaining a predetermined assist torque and, therefore, for example, if a torque-down control of the engine is provided before connecting the clutch, the engine becomes unable to rotate in a self-sustaining manner and may stall. If the engagement torque of the clutch is made larger to prevent the stall, the assist torque from the rotating machine becomes larger and deteriorates fuel efficiency etc., impairing the benefit of the ignition start.

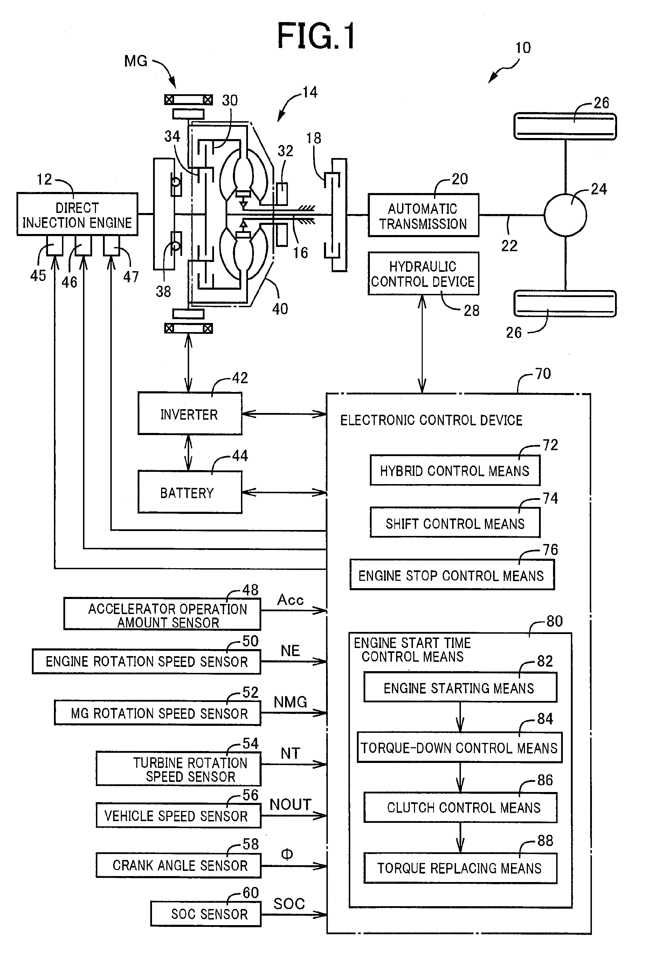

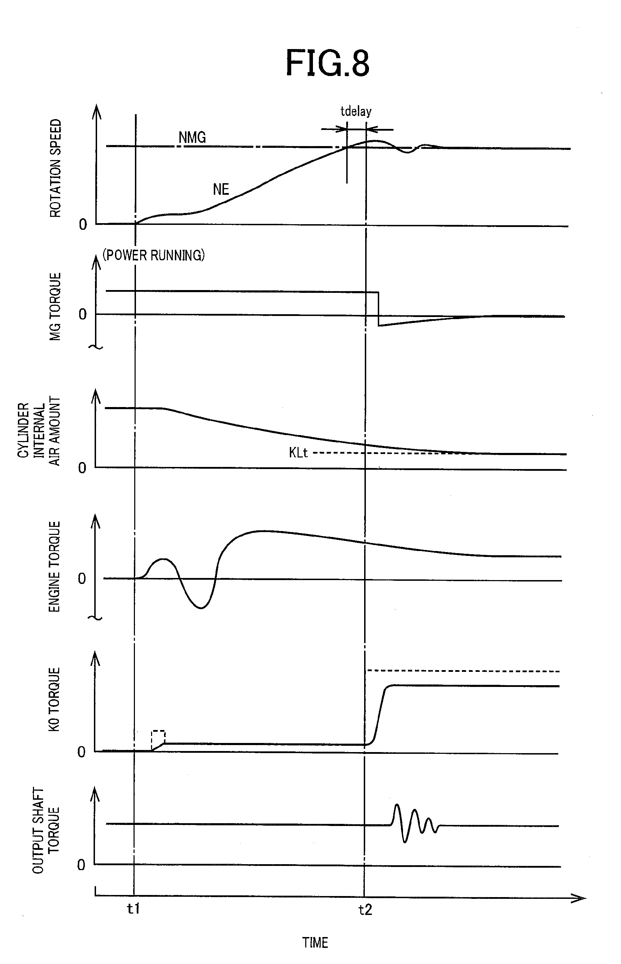

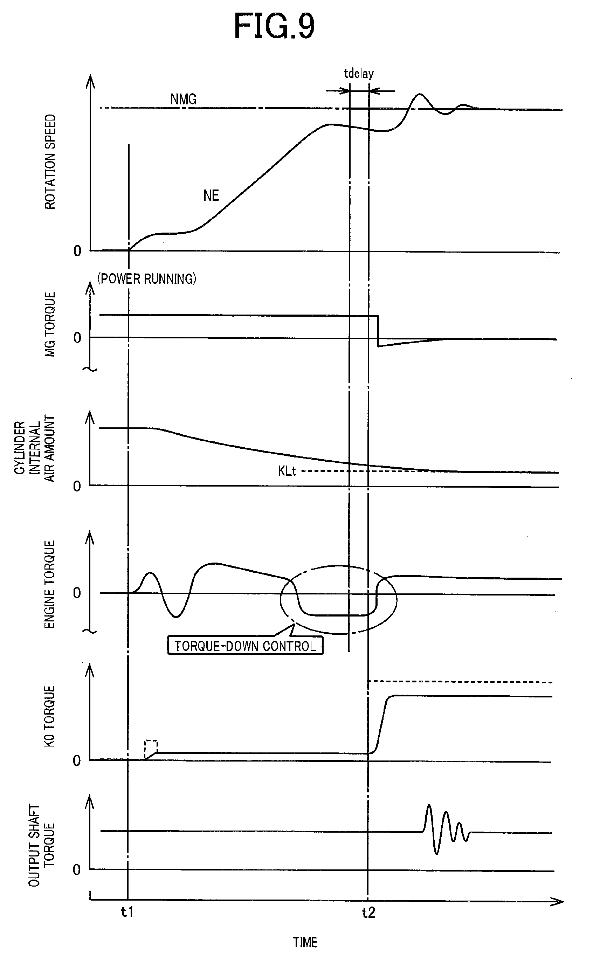

Figs. 8 and 9 depict examples of time charts for explaining operations of portions related to a control of a hybrid vehicle 10 for starting an engine depicted in Fig. 1, which is still unknown. In the case of Fig. 8, when an ignition start of a direct injection engine 12 is started at time t1 and a K0 clutch 34 is connected after an engine rotation speed NE increases and substantially synchronizes with a rotation speed NMG of a motor generator MG, determination time t2 of the connection timing is delayed by a delay time tdelay, resulting in an overshooting (racing-up) of the engine rotation speed NE and a connection shock (variation of output shaft torque) due to subsequent engagement of the K0 clutch 34 (increase in K0 torque). In the case of Fig. 9, a torque-down control of the direct injection engine 12 is provided before the K0 clutch 34 is connected and, since determination time t2 of the connection timing is delayed by the delay time tdelay, the engine rotation speed NE is reduced and the connection shock (variation of output shaft torque) is generated due to subsequent engagement of the K0 clutch 34. The "K0 torque" in Figs. 8 and 9 is an engagement torque of the K0 clutch 34, and a broken line and a solid line indicate a command value and an actual torque value, respectively.

The present invention was conceived in view of the situations and it is therefore an object of the present invention to improve drivability performance and riding quality in a hybrid vehicle having a direct injection engine connected/disconnected by a clutch to/from a power transmission path when the clutch is connected after the direct injection engine is started by ignition start.

### Means for solving the Problem

To achieve the object, the first aspect of the invention provides a control device of a hybrid vehicle for starting an engine, a control device of a hybrid vehicle for starting an engine, the hybrid vehicle having (a) a direct injection engine directly injecting fuel into a cylinder, (b) a clutch connecting/disconnecting the direct injection engine to/from a power transmission path, and (c) a rotating machine acting at least as an electric motor, (d) the hybrid vehicle being configured to run by concurrently or separately using the direct injection engine and the rotating machine as a drive force source and, the hybrid vehicle being configured to execute ignition start of the direct injection engine in which the direct injection engine is started by injecting and igniting fuel in a cylinder during stop of the direct injection engine, wherein (e) an engine torque is reduced based on a speed difference between an engine rotation speed and a rotation speed of a power transmission path side across the clutch when the speed difference is smaller as compared to the speed difference is larger such that the engine torque is reduced as the engine rotation speed comes closer to the rotation speed of the power transmission path side, when the clutch is connected after the ignition start of the direct injection engine is performed.

The second aspect of the invention provides the control device of a hybrid vehicle for starting an engine recited in the first aspect of the invention, wherein if the engine torque cannot be reduced depending on the speed difference, the direct injection engine is restrained from racing up by an engagement torque of the clutch.

The third aspect of the invention provides the control device of a hybrid vehicle for starting an engine recited in the first aspect of the invention, wherein if the engine torque cannot be reduced depending on the speed difference, an engagement of the clutch is waited until a stable state in which a cylinder internal air amount of the direct injection engine is defined depending on a throttle valve opening degree.

The fourth aspect of the invention provides the control device of a hybrid vehicle for starting an engine recited in the first aspect of the invention, wherein when the clutch is connected after the ignition start of the direct injection engine is performed, the engine torque is reduced depending on the speed difference such that the engine torque is reduced as the engine rotation speed comes closer to the rotation speed of the power transmission path side across the clutch, and such that the engine rotation speed is maintained at a constant value when the speed difference becomes zero.

### Effects of the Invention

In the engine start time control device of a hybrid vehicle as described above, an engine torque is reduced based on a speed difference between an engine rotation speed and a rotation speed of a power transmission path side across the clutch when the speed difference is smaller as compared to the speed difference is larger such that the engine torque is reduced as the engine rotation speed comes closer to the rotation speed of the power transmission path side, when the clutch is connected after the ignition start of the direct injection engine is performed. Therefore, the racing-up of the direct injection engine and the connection shock are suppressed regardless of deviation of the connection timing of the clutch, and the drivability performance and the riding quality are improved. Since the engine torque is reduced in accordance with the speed difference, a stall etc. of the direct injection engine due to inability of self-sustaining rotation is properly avoided as compared to the case of reducing the engine torque uniformly regardless of a change in the speed difference.

In the second aspect of the invention, since if the engine torque cannot be reduced depending on the speed difference, for example, if the delayed lower limit torque defined depending on the throttle valve opening degree is reached when the engine torque is reduced by the delay control, direct injection engine is restrained from racing up by an engagement torque of the clutch, the clutch can properly be connected so as not to generate the drive force variation while the racing-up of the direct injection engine is suppressed.

In the third aspect of the invention, if the engine torque cannot be reduced depending on the speed difference, an engagement of the clutch is waited until a stable state in which a cylinder internal air amount of the direct injection engine is defined depending on a throttle valve opening degree as is the case with the second aspect of the invention, and, therefore, even when the torque cannot be absorbed by the regenerative control of the rotating machine due to full charge of a battery etc., the clutch can properly be connected while the drive force variation is suppressed. In particular, since the surge tank etc, is the atmospheric pressure immediately after the engine start, the cylinder internal air amount is large, generating the larger torque; however, because the surge tank etc, turns to a negative pressure in an engine operating state, the cylinder internal air amount is reduced and a torque corresponding to the throttle valve opening degree (request output of a driver) is achieved and, therefore, if the clutch is connected in this state, a necessity to absorb an excess torque is eliminated.

In the fourth aspect of the invention, since the engine torque is reduced depending on the speed difference such that the engine torque is reduced as the engine rotation speed comes closer to the rotation speed of the power transmission path side, and such that the engine rotation speed is maintained at a constant value when the speed difference between the engine rotation speed and the rotation speed of the power transmission path side becomes zero, the racing-up of the direct injection engine and the connection shock are more properly suppressed regardless of deviation of the connection timing of the clutch.

### BRIEF DESCRIPTION OF THE DRAWINGS

Fig. 1 is a diagram of a general configuration indicating a schematic of a hybrid vehicle to which the present invention is preferably applied as well as a main portion of a control system.
Fig. 2 is a cross-sectional view for explaining the direct injection engine of a hybrid vehicle of Fig. 1.
Fig. 3 is a flowchart for specifically explaining an operation of an engine start time control means functionally included in the electronic control device of Fig. 1.
Fig. 4 is an example of time charts for explaining a change in operation states of portions when the engine start time control is performed in accordance with steps S3 to S7 of the flowchart in Fig.3.
Fig. 5 is an example of time charts for explaining a change in operation states of portions when the engine start time control is performed in accordance with steps S3, S4, S8 to S 12, S6 and S7 of the flowchart in Fig.3.
Fig. 6 is a diagram for explaining a torque-down lower limit value TEmin of step S4 in Fig.3.
Fig. 7 is an example of time charts for explaining a change in operation states of portions when the engine start time control is performed in accordance with steps S3, S4, S8, S 13 to 16, S6 and S7 of the flowchart in Fig. 3.
Fig. 8 is an example of time charts when a connection shock due to deviation of a connection timing at the time of connecting the clutch is occurred after the direct injection engine is started by the ignition start.
Fig. 9 is an example of time charts when a connection shock due to deviation of a connection timing is occurred if a torque-down control is performed at the time of connecting the clutch after the direct injection engine is started by the ignition start.

### MODE FOR CARRYING OUT THE INVENTION

The present invention is preferably applied to a hybrid vehicle of a parallel type etc., having a direct injection engine connected/disconnected (connected, interrupted) by a clutch to/from a power transmission path, and is preferably applied when a transition is made from a motor running mode using only a rotating machine as a drive force source for running to an engine running mode or an engine + motor running mode using the direct injection engine as a drive force source for running. If the ignition start of the direct injection engine is performed and a clutch is connected while at least a member on the power transmission path side of the clutch (including the case of a rotating machine) rotates at a predetermined rotation speed, the present invention is applicable. The clutch is preferably a friction engagement clutch of a single-plate type, a multi-plate type, etc.

A hybrid vehicle of the present invention can use a direct injection engine and a rotating machine as the drive force source for running and the rotating machine is preferably a motor generator capable of alternatively using functions of both an electric motor and an electric generator. The direct injection engine is preferably a four-cycle gasoline engine and can be direct injection engines having various numbers of cylinders including a multiple cylinder engine having four or more cylinders. The direct injection engine may be other reciprocating internal combustion engines capable of injecting fuel into a cylinder in an expansion stroke for the ignition start, such as a two-cycle gasoline engine.

The rotating machine may be disposed in a power transmission path to which the direct injection engine is connected via the clutch, or the rotating machine and the direct injection engine may directly be coupled via the clutch, and a transmission mechanism etc. may be interposed between the rotating machine and the direct injection engine. The direct injection engine and the rotating machine can be disposed in respective different power transmission paths such as disposing the rotating machine on a rear wheel drive side when the direct injection engine is connected to a power transmission path on a front wheel drive side.

The ignition start of the direct injection engine is performed, when at least any cylinder is in the expansion stroke, by injecting and igniting fuel in the cylinder in the expansion stroke, and the direct injection engine may be started by only the ignition start or the clutch may be put into slip engagement such that a rotation of the direct injection engine is assisted (cranked) by kinetic energy of the rotating machine or the vehicle. Even when the rotation is assisted by the kinetic energy of the vehicle, torque is desirably compensated by the rotating machine for suppression of drive force variation.

For example, as in the fourth aspect of the invention, the present invention is configured with a torque-down control means reducing an engine torque depending on a speed difference (= power transmission path side rotation speed - engine rotation speed) to reduce the engine torque as the engine rotation speed comes closer to the power transmission path side rotation speed such that the engine rotation speed is maintained at a constant value when the speed difference becomes zero between the engine rotation speed and the power transmission path side rotation speed, and the engine torque is controlled in proportion to the speed difference, for example; however, the engine torque may be changed nonlinearly or in stages relative to the speed difference. Although this torque-down control is suitably delay control of ignition timing with excellent responsiveness, the control may be provided by using an intake air amount adjustment device such as a throttle valve. The control of "maintaining the engine rotation speed constant when the speed difference becomes zero" is merely a target and may allow the engine rotation speed to somewhat vary due to responsiveness or an error of the control, and the engine torque may be controlled such that racing-up and a stall are prevented. To maintain the engine rotation speed constant, the engine torque may basically be set to zero and, if some load is applied, a predetermined engine torque corresponding to the load may be generated as needed such that the engine rotation speed is maintained at a substantially constant value. The implementation of the first aspect of the invention only requires the engine torque to be reduced continuously or in stages at least as the speed difference becomes smaller.

In the second aspect of the invention, if the engine torque cannot be reduced depending on the speed difference, the direct injection engine is restrained from racing up by the engagement torque of the clutch and, in this case, since the clutch is connected while the direct injection engine generates a predetermined engine torque, it is desirable to reduce a torque of the rotating machine or to make an adjustment with the engagement torque of the clutch so as to absorb the engine torque.

The stable state of the third aspect of the invention means that a target air amount corresponding to a throttle valve opening degree is achieved, and does not necessarily mean that a cylinder internal air amount becomes substantially constant. In other words, if the throttle valve opening degree varies depending on a change in output request amount (such as an accelerator operation amount) from a driver, the target air amount also varies and, therefore, if the cylinder internal air amount becomes substantially the same as the target air amount, this can be considered as the stable state even when the cylinder internal air amount varies depending on a change in the throttle valve opening degree. Example

An example of the present invention will now be described in detail with reference to drawings.

Fig. 1 is a diagram of a general configuration including a schematic of a drive system of a hybrid vehicle 10 to which the present invention is preferably applied. The hybrid vehicle 10 includes a direct injection engine 12 directly injecting fuel into a cylinder and a motor generator MG acting as an electric motor and an electric generator, as a drive power source for running. An output of the direct injection engine 12 and the motor generator MG is transmitted from a torque converter 14 that is a fluid transmission device via a turbine shaft 16 and a C1 clutch 18 to an automatic transmission 20 and further transmitted via an output shaft 22 and a differential gear device 24 to left and right drive wheels 26. The torque converter 14 includes a lockup clutch (L/U clutch) 30 directly coupling a pump impeller and a turbine impeller with the pump impeller integrally connected to an oil pump 32 and is mechanically rotationally driven by the direct injection engine 12 and the motor generator MG The motor generator MG corresponds to a rotating machine.

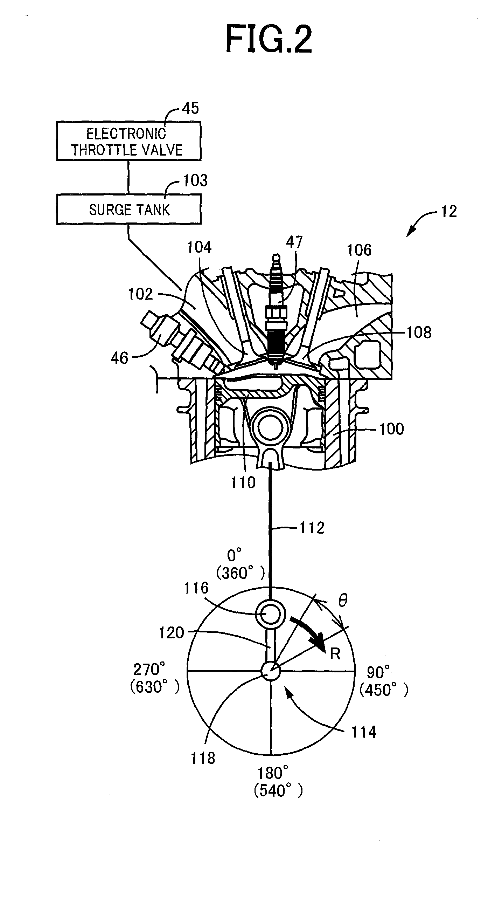

For the direct injection engine 12, an eight-cylinder four-cycle gasoline engine is used in this example and, as specifically depicted in Fig. 2, gasoline (high-pressure particulate) is directly injected by a fuel injection device 46 into a cylinder 100. The direct injection engine 12 allows air to flow from an intake passage 102 via an intake valve 104 into the cylinder 100 and allows exhaust gas to be discharged via an exhaust valve 108 from an exhaust passage 106 and, when ignition is caused by an ignition device 47 at a predetermined timing, air-fuel mixture in the cylinder 100 is exploded and combusted to push down a piston 110 to the lower side. The intake passage 102 is connected via a surge tank 103 to an electronic throttle valve 45 acting as an intake air amount adjustment device so as to control an amount of intake air flowing from the intake passage 102 into the cylinder 100, i.e., engine output, in accordance with an opening degree of the electronic throttle valve 45 (throttle valve opening degree). The piston 110 is axially slidably fitted into the cylinder 100 and is relatively rotatably coupled via a connecting rod 112 to a crank pin 116 of a crankshaft 114, and the crankshaft 114 is rotationally driven as indicated by an arrow R in accordance with linear reciprocating movement of the piston 110. The crankshaft 114 is rotatably supported by a bearing in a journal portion 118 and integrally includes a crank arm 120 connecting the journal portion 118 and the crank pin 116.

The direct injection engine 12 as described above performs four strokes, i.e., an intake stroke, a compression stroke, an expansion (explosion) stroke, and an exhaust stroke, per two rotations (720 degrees) of the crankshaft 114 and this is repeated to allow the crankshaft 114 to continuously rotate. The pistons 110 of the eight cylinders 100 are configured to have the respective crank angles shifted by 90 degrees from each other and, each time the crankshaft 114 rotates by 90 degrees, the eight cylinders 100 are exploded and combusted in order, thereby continuously generating a rotation torque. When the crankshaft 114 rotates by a predetermined angle from a compression TDC at which the piston 110 of any of the cylinders 100 reaches the TDC (top dead center) after the compression stroke, and is stopped within a predetermined angle range θ in the expansion stroke with both the intake valve 104 and the exhaust valve 108 closed, gasoline can be injected by the fuel injection device 46 into the cylinder 100 and ignited by the ignition device 47 to perform an ignition start in which the air-fuel mixture in the cylinder 100 is exploded and combusted for a start. If friction of the portions of the direct injection engine 12 is small, the direct injection engine 12 can be started by the ignition start only and, even if the friction is large, the ignition start can reduce a start assist torque at the time of start with cranking of the crankshaft 114 and, therefore, a maximum torque of the motor generator MG generating the assist torque can be reduced to achieve smaller size and lower fuel consumption. When the angle range θ is within an appropriate range of, for example, about 30 to 60 degrees from the compression TDC, relatively large rotation energy can be acquired from the ignition start to reduce the assist torque. In the case of an eight-cylinder engine, the ignition start can be performed even within about 80 to 100 degrees from the compression TDC and the angle range θ differs depending on the number of cylinders of the direct injection engine 12.

Returning to Fig. 1, a K0 clutch 34 is disposed between, and directly couples, the direct injection engine 12 and the motor generator MG via a damper 38. The K0 clutch 34 is a single-plate or multi-plate friction clutch frictionally engaged by a hydraulic cylinder and is subjected to engagement/release control by a hydraulic control device 28 and disposed in an oil bath condition within an oil chamber 40 of the torque converter 14 in this example. The K0 clutch 34 is a hydraulic friction engagement device and acts as a connecting/disconnecting device connecting and disconnecting the direct injection engine 12 to/from a power transmission path. The motor generator MG is connected via an inverter 42 to a battery 44. The automatic transmission 20 is a stepped automatic transmission of planetary gear type etc., having a plurality of gear stages with different gear ratios established depending on engaged/released states of a plurality of hydraulic friction engagement devices (clutches and brakes) and is subjected to shift control by electromagnetic hydraulic control valves, switching valves, etc., disposed in the hydraulic control device 28. The C1 clutch 18 acts as an input clutch of the automatic transmission 20 and is also subjected to engagement/release control by the hydraulic control device 28.

The hybrid vehicle 10 as described above is controlled by an electronic control device 70. The electronic control device 70 includes a so-called microcomputer having a CPU, a ROM, a RAM, an I/O interface, etc., to execute signal processes in accordance with a program stored in advance in the ROM, while utilizing a temporary storage function of the RAM The electronic control device 70 is supplied with a signal indicative of an operation amount (accelerator operation amount) Acc of an accelerator pedal from an accelerator operation amount sensor 48. The electronic control device 70 is also supplied with signals related to a rotation speed (engine rotation speed) NE of the direct injection engine 12, a rotation speed (MG rotation speed) NMG of the motor generator MG, a rotation speed (turbine rotation speed) NT of the turbine shaft 16, a rotation speed (output shaft rotation speed corresponding to vehicle speed V) NOUT of the output shaft 22, a rotation angle (crank angle) ϕ from a TDC (top dead center) of each of the eight cylinders 100, and an electric storage remaining amount SOC of the battery 44, from an engine rotation speed sensor 50, an MG rotation speed sensor 52, a turbine rotation speed sensor 54, a vehicle speed sensor 56, a crank angle sensor 58, and an SOC sensor 60, respectively. Various pieces of information necessary for various controls are also supplied. The SOC sensor 60 is configured to sequentially integrate a charge amount and a discharge amount of the battery 44 so as to obtain the electric storage remaining amount SOC, for example. The accelerator operation amount Acc corresponds to an output request amount.

The electronic control device 70 functionally includes a hybrid control means 72, a shift control means 74, an engine stop control means 76, and an engine start time control means 80. The hybrid control means 72 controls actuation of the direct injection engine 12 and the motor generator MG to switch a plurality of predefined running modes, such as an engine running mode using only the direct injection engine 12 as the drive power source for running, a motor running mode using only the motor generator MG as the drive power source for running, and an engine + motor running mode using both for running, depending on an operation state such as the accelerator operation amount Acc and the vehicle speed V for running, for example. The shift control means 74 controls the electromagnetic hydraulic control valves, switching valves, etc., disposed in the hydraulic control device 28 to switch the engaged/released states of the plurality of the hydraulic friction engagement devices, thereby switching a plurality of the gear stages of the automatic transmission 20 in accordance with a shift map defined in advance by using operation states such as the accelerator operation amount Acc and the vehicle speed V as parameters.

The engine stop control means 76 provides control for stopping the direct injection engine 12 at the time of switching from the engine + motor running mode to the motor running mode, at the time of inertia running during the engine + motor running mode or the engine running mode, at the time of deceleration, at the time of vehicle stop, etc., and adjusts a stop position of the crankshaft 114 such that the ignition start can be performed when the direct injection engine 12 is restarted. In other words, when the K0 clutch 34 is interrupted to stop the rotation of the direct injection engine 12, the K0 clutch 34 is temporarily put into slip engagement immediately before the stop or immediately after the stop to rotate the crankshaft 114 so as to make an adjustment such that the crank angle ϕ of any of the cylinders 100 falls within the angle range θ in which the ignition start can be performed. As a result, the engine can be started by the ignition start at a subsequent engine start and the assist torque from the motor generator MG can be reduced to achieve smaller size and lower fuel consumption of the motor generator MG

The engine start time control means 80 provides control when the direct injection engine 12 is started and connected to the power transmission path by the K0 clutch 34, so as to switch, for example, the motor running mode to the engine + motor running mode or the engine running mode, and to charge the battery 44 by providing regenerative control (also referred to as electric generation control) of the motor generator MG while operating the direct injection engine 12 during vehicle stop. The engine start time control means 80 functionally includes an engine starting means 82, a torque-down control means 84, a clutch control means 86, and a torque replacing means 88.

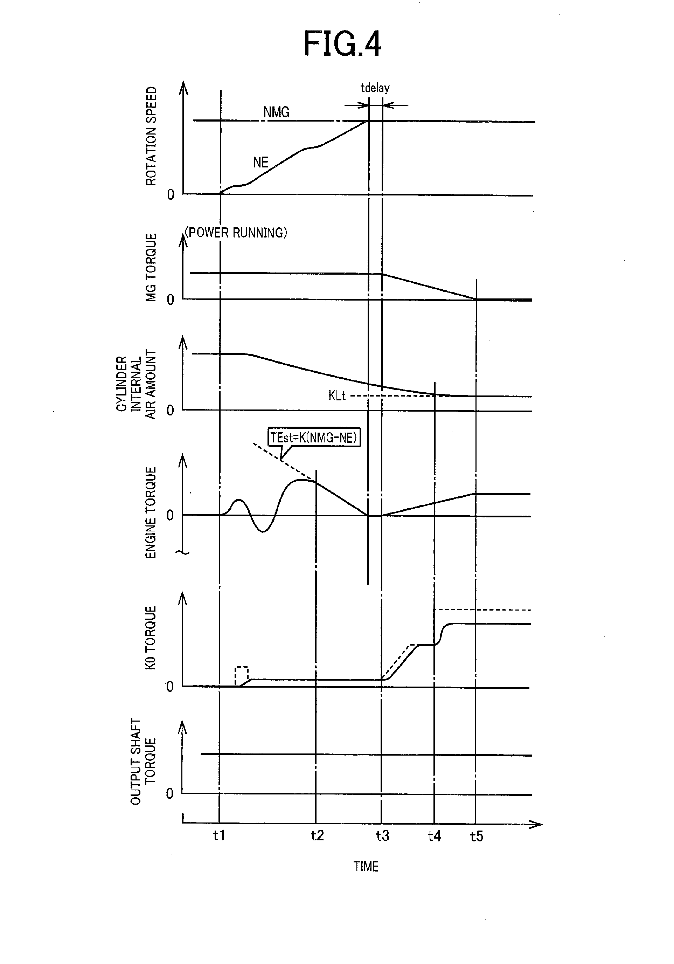

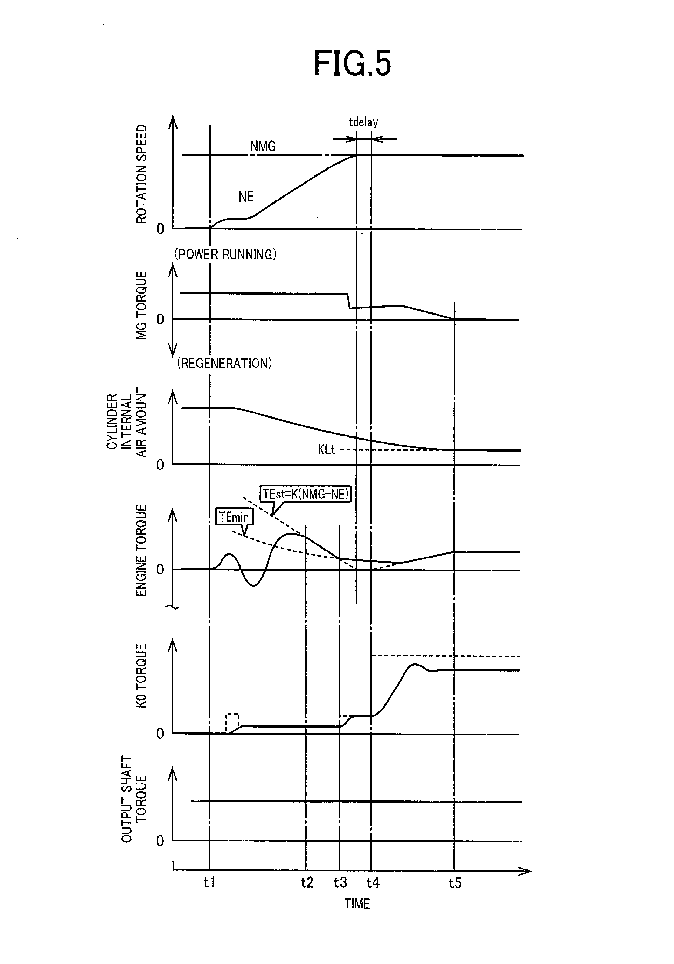

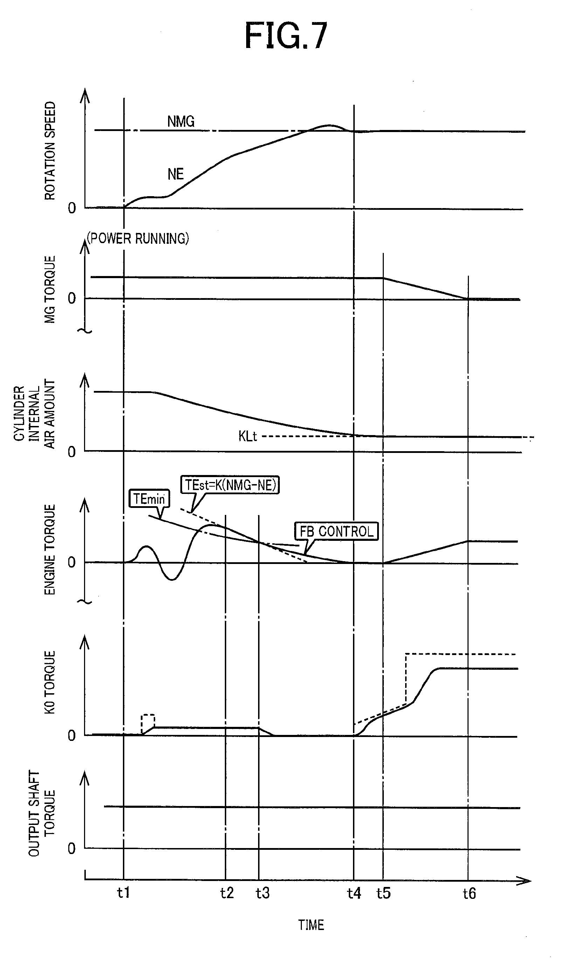

The engine starting means 82 starts the direct injection engine 12 by the ignition start and performs the ignition start while the K0 clutch 34 is put into the slip engagement to assist the rotation of the direct injection engine 12. Figs. 4, 5, and 7 are time charts when the ignition start of the direct injection engine 12 is performed during running in the motor running mode and, at time t1 that is an ignition start initiation time, the ignition start is performed by injecting fuel into the cylinder 100 in the expansion stroke and igniting the fuel, and the K0 clutch 34 is put into the slip engagement at a predetermined engagement torque (K0 torque) to assist the rotation of the engine 12. A magnitude of the engagement torque is defined as the lowest torque within a range in which the direct injection engine 12 can be started by the ignition start. Although the torque of the motor generator MG (MG torque) is increased by the same level as the engagement torque (assist torque) to prevent drive force variation, this is sufficiently small and therefore is not depicted in the figures. When the engine rotation speed NE rises to a predetermined rotation speed, the K0 clutch 34 may be released (K0 torque=0) as depicted in Fig. 7; however, in Figs. 4 and 5, the slip engagement is continued in consideration of a delay in response at the time of subsequent connection control.

A broken line and a solid line in a "K0 torque" field in each of the time charts indicate a command value and an actual torque value, respectively, and a difference between the both lines at a final stage of complete engagement of the K0 clutch 34 is caused because the command value represents the maximum value (maximum oil pressure) while the actual torque value is determined by a line pressure. A "cylinder internal air amount" is an air amount in the cylinder 100 of the direct injection engine 12 and corresponds to a pressure in the surge tank 103 (surge tank pressure) and, since the pressure is an atmospheric pressure at the beginning of the engine start, a cylinder internal air amount KL is large, generating a larger engine torque; however, the amount gradually decreases (converges) to a target value of the cylinder internal air amount KLt corresponding to a throttle valve opening degree and the engine torque is stabilized. Although not depicted, if the direct injection engine 12 is started during engine stop for battery charge etc., the C1 clutch 18 is released to completely engage the K0 clutch 34 and the ignition start is performed while the rotation is assisted by the motor generator MG

If the ignition start of the direct injection engine 12 is performed in this way, the K0 clutch 34 may be connected when the engine rotation speed NE increases and substantially synchronizes (at substantially the same rotation speed) with the rotation speed NMG of the motor generator MG; however, if a connection timing is deviated by an error of synchronization determination or a delay in response of an oil pressure of the K0 clutch 34, the direct injection engine 12 may race up or a connection shock (drive force variation) may occur due to a change in the engine rotation speed NE associated with the subsequent engagement of the K0 clutch 34, resulting in deterioration of drivability performance or riding quality. For example, if determination time t2 of the connection timing is delayed by a delay time tdelay as depicted in Fig. 8, this generates an overshooting (racing-up) of the engine rotation speed NE and the connection shock (variation of output shaft torque) due to subsequent engagement of the K0 clutch 34. Fig. 9 depicts the case that a torque-down control of the direct injection engine 12 is provided before connecting the K0 clutch 34 so as to prevent the overshooting of the engine rotation speed NE and, if determination time t2 of the connection timing is delayed by the delay time tdelay, the engine rotation speed NE is reduced and the connection shock (variation of output shaft torque) occurs due to the subsequent engagement of the K0 clutch 34.

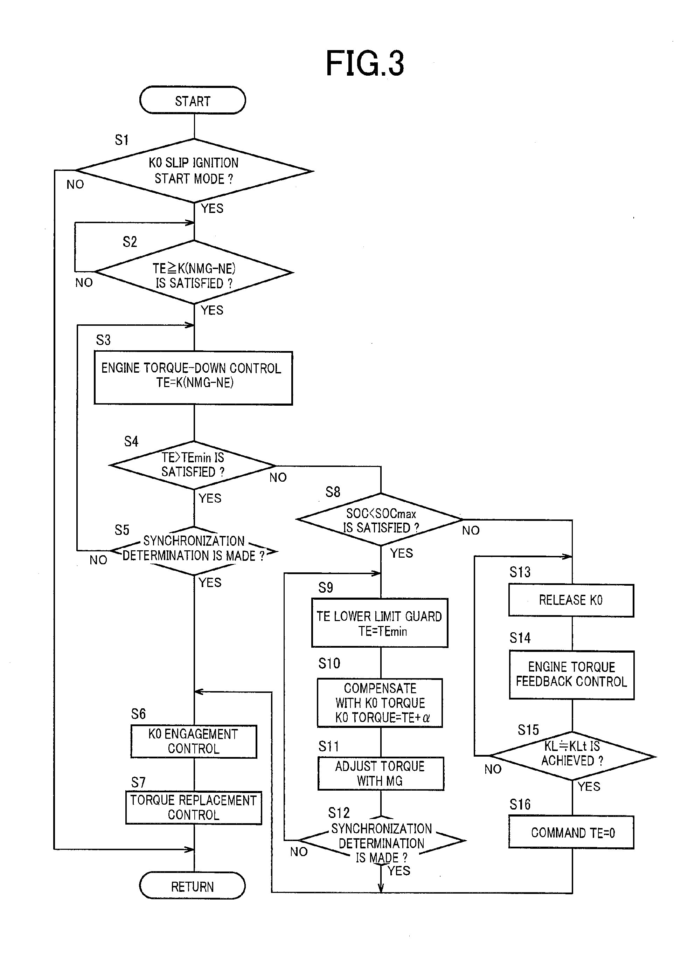

In contrast, the engine start time control means 80 of this example causes the torque-down control means 84 and the clutch control means 86 to properly connect the K0 clutch 34 while suppressing the racing-up of the direct injection engine 12 and the connection shock. Fig. 3 is a flowchart for specifically explaining an operation of an engine start time control including signal processes by the torque-down control means 84 and the clutch control means 86 and steps S3, S9, and S 14 correspond to the torque-down control means 84 while steps S6 and S10 correspond to the clutch control means 86. Step S7 corresponds to the torque replacing means 88. Step S10 functions as a racing suppression securing means and step S 15 functions as a cylinder internal air amount convergence determining means.

At step S1 of Fig. 3, it is determined whether a start mode of the direct injection engine 12 is an ignition start using the slip engagement of the K0 clutch 34 at the same time. In particular, if the K0 clutch 34 is completely engaged to perform the ignition start of the direct injection engine 12 during vehicle stop, since the K0 clutch 34 is already completely connected at this time point, this control is not necessary, and step S2 and the following steps are executed when the K0 clutch 34 is put into the slip engagement to perform the ignition start. At step S2, it is determined whether a rise in the engine rotation speed NE reduces a speed difference (NMG-NE) from the MG rotation speed NMG and causes an engine torque TE to exceed a limit torque TEst=K(NMG-NE) defined by using the speed difference (NMG-NE) as a parameter. The limit torque TEst is the engine torque TE during the torque-down control, and a constant K is an adaptive value defined in advance such that the K0 clutch 34 can be connected while suppressing the overshooting of the engine rotation speed NE and the connection shock, and may be a constant value or may be defined by using the MG rotation speed NMG etc., as a parameter. Although an actual calculation value can be used for the engine torque TE, an engine torque estimation value (maximum torque) TEfwd predicted only from the cylinder internal air amount KL is conveniently used, for example. The cylinder internal air amount KL is obtained from a surge tank pressure etc.

When the engine torque TE (the estimation value TEfwd in the example) becomes equal to or greater than the limit torque TEst and the determination of step S2 turns to YES (becomes affirmative), a torque-down control of step S3 is provided. This torque-down control limits the engine torque TE to the limit torque TEst, i.e., K(NMG-NE), and the engine torque TE is reduced in proportion to the speed difference (NMG-NE). In other words, the engine torque TE is reduced as the engine rotation speed NE comes closer to the MG rotation speed NMG and, when the engine rotation speed NE becomes substantially the same as the MG rotation speed NMG and the speed difference (NMG-NE) becomes substantially zero, the engine torque TE also becomes substantially zero and the engine rotation speed NE is maintained substantially at a constant value. In this example, the engine torque TE is limited to the limit torque TEst by a delay control of an ignition timing. Time t2 in the time charts of Figs. 4, 5, and 7 is a time when the engine torque TE becomes equal to or greater than the limit torque TEst and the torque-down control of step S3 is started. In this example, the MG rotation speed NMG is a rotation speed of the power transmission path side.

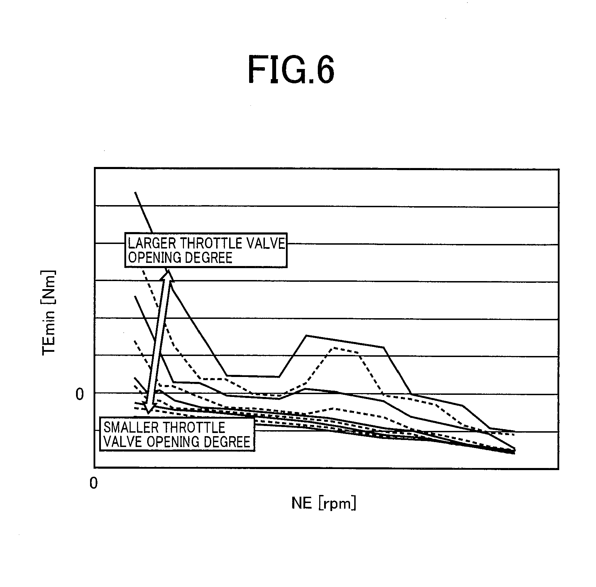

At next step S4, it is determined whether the engine torque TE (=K(NMG-NE)) is greater than a torque-down lower limit value TEmin. The torque-down lower limit value TEmin is a lower limit torque controllable by the delay control of the ignition timing (delayed lower limit torque), is defined by using the engine rotation speed NE and the throttle valve opening degree as parameters as depicted in Fig. 6, for example, and is made generally higher on a lower rotation side and higher when the throttle valve opening degree is larger. Since the engine torque TE=K(NMG-NE) never becomes negative, the engine torque TE may become equal to or less than the torque-down lower limit value TEmin when the throttle valve opening degree is equal to or greater than a predetermined value (e.g., about 30 %). If TE>TEmin is satisfied, step S5 and the following steps are executed since the torque-down control of step S3 can be continued without a change and, if TE≤TEmin is satisfied, step S8 and the following steps are executed since the torque-down control of step S3 cannot be provided. Step S8 and the following steps are also executed when the delay control is inhibited for prevention of degradation of catalyst etc.

At step S5, synchronization determination is made on whether the engine rotation speed NE is substantially identical to the MG rotation speed NMG and step S3 and the following steps are repeatedly executed until synchronization. If NE≈NMG is achieved and the determination of step S5 turns to YES, the K0 clutch 34 is subjected to engagement control at step S6 and replacement control is provided between the engine torque TE and the MG torque at step S7. The time chart of Fig. 4 represents the case that steps S3 to S7 are executed to connect the K0 clutch 34 and time t3 is a time when the engagement control of the K0 clutch 34 and the torque replacement control are started in association with the synchronization determination. In the engagement control of the K0 clutch 34 of step S6, a K0 torque (oil pressure) is gradually increased during waiting at a predetermined waiting torque and, when the cylinder internal air amount KL decreases to be equal to or less than a predetermined value close to a target air amount KLt defined depending on the throttle valve opening degree, the K0 torque is increased to the maximum value to achieve complete engagement. Time t4 is a time when the cylinder internal air amount KL decreases to be close to the target air amount KLt. In the torque replacement control of step S7, the delay of the ignition timing is gradually reduced to gradually increase the engine torque TE while the MG torque is gradually reduced in accordance with the increase in the engine torque TE. Time t5 is a time when the torque replacement control is completed.

Although the time chart of Fig. 4 represents the case that the synchronization determination corresponding to the connection timing of the K0 clutch 34 is delayed by the delay time tdelay as is the case with the time charts of Figs. 8 and 9, since the engine torque TE is controlled to the limit torque TEst=K(NMG-NE) through the torque-down control of step S3, the engine torque TE≈0 is achieved in a synchronized state of NE≈NMG. Therefore, even if the synchronization determination is delayed, the engine rotation speed NE is maintained at a substantially constant value to suppress the racing-up and the connection shock is suppressed when the K0 clutch 34 is subsequently subjected to the engagement control.

At step S8 executed if the determination of step S4 is NO (negative), i.e., if the engine torque TE becomes equal to or less than the torque-down lower limit value TEmin, it is determined whether the electric storage remaining amount SOC is less than a full charge determination value SOCmax. In the case of SOC<SOCmax, step S9 and the following steps are executed because an excess torque can be absorbed by the regenerative control of the motor generator MG and, in the case of SOC≥SOCmax, step S 13 and the following steps are executed because an excess torque cannot be absorbed by the regenerative control of the motor generator MG If the delay control is inhibited for prevention of degradation of catalyst etc., step S 13 and the following steps are executed regardless of the electric storage remaining amount SOC. The time chart of Fig. 5 represents the case that the K0 clutch 34 is connected through the control of step S9 and the following steps and the time chart of Fig. 7 represents the case that the K0 clutch 34 is connected through the control of step S 13 and the following steps. Time t3 of Figs. 5 and 7 is a time when the engine torque TE becomes equal to or less than the torque-down lower limit value TEmin and the determination of step S4 turns to NO and, although the engine torque TE is reduced in accordance with the limit torque TEst through the torque-down control of step S3 during time t2 to t3 in all the cases, the control from the time t3 is different.

At step S9 executed if the SOC<SOCmax is satisfied and the regeneration control of the motor generator MG can be provided, the engine torque TE is controlled to the torque-down lower limit value TEmin. In this case, even when the synchronization state of NE≈NMG is achieved, the direct injection engine 12 generates a predetermined engine torque TE=TEmin and, therefore, if the engagement control of the K0 clutch 34 is delayed due to a delay in synchronization determination, the engine rotation speed NE may rise greater than the MG rotation speed NMG due to the engine torque TE. Thus, at next step S 10, the K0 clutch 34 is engaged at a torque larger than the engine torque TE by a predetermined margin value α to prevent the direct injection engine 12 from rising greater than the MG rotation speed NMG The margin value α is preliminarily set to a constant value in consideration of an error of the torque-down lower limit value TEmin etc. In this case, since the engine torque TE is transmitted via the K0 clutch 34 to the power transmission path within a range of the engagement torque, the MG torque is controlled to cancel the engine torque TE at step S 11. In this case, the motor generator MG is regeneratively controlled as needed.

At next step S 12, the synchronization determination is made as is the case with step S5, and step S9 and the following steps are repeatedly executed until synchronization. If NE≈NMG is achieved and the determination of step S12 turns to YES, the K0 engagement control of step S6 and the torque replacement control of step S7 are provided. Time t4 of the time chart of Fig. 5 is a time when the engagement control of the K0 clutch 34 is started in association with the synchronization determination and, in this case, the command value of the K0 clutch 34 is immediately increased to the maximum value to promptly put the K0 clutch 34 into the complete engagement. Time t5 is the time when the torque replacement control of step S7 is completed.

The time chart of Fig. 5 represents the case that the synchronization determination corresponding to the connection timing of the K0 clutch 34 is delayed by the delay time tdelay as is the case with the time charts of Figs. 8 and 9 and the direct injection engine 12 generates a torque of the torque-down lower limit value TEmin due to the control to TE=TEmin at step S9 even when the synchronization state of NE≈NMG is achieved; however, since the K0 clutch 34 is engaged at an engagement torque of TE+α at step S 10, the direct injection engine 12 is prevented from rising greater than the MG rotation speed NMG At step S11, the MG torque is adjusted to cancel the engine torque TE (=TEmin). As a result, despite the synchronization determination delay, the racing-up of the direct injection engine 12 is prevented and the connection shock is suppressed when the K0 clutch 34 is subsequently subjected to the engagement control.

At step S13 executed if the determination of step S8 is NO, i.e., if SOC≥SOCmax is satisfied and the regenerative control of the motor generator MG cannot be provided, the K0 clutch 34 is released (K0 torque=0). At step S14, the torque of the direct injection engine 12 is subjected to a feedback control through a throttle control etc., such that the engine rotation speed NE rises at a predetermined gradient to the MG rotation speed NMG, i.e., the synchronous rotation speed, for example. In this case, the feedback control (FB control) is provided at a relatively small follow-up speed to avoid an engine stall. As a result, the racing-up of the direct injection engine 12 is suppressed. Since the K0 clutch 34 is released, the drive force variation cannot be caused by the engine torque TE.

At step S 15, it is determined whether the cylinder internal air amount KL decreases (converges) to be equal to or less than the predetermined value close to the target air amount KLt defined depending on the throttle valve opening degree, and step S 13 and the following steps are repeatedly executed until KL≈KLt is achieved. If KL≈KLt is achieved, the engine torque TE=0 is set at step S 16 and, subsequently, the K0 engagement control of step S6 and the torque replacement control of step S7 are provided. Time t4 of the time chart of Fig. 7 is a time when a convergence determination of KL≈KLt is made and the engagement control of the K0 clutch 34 is started and, in this case, the engagement torque (K0 torque) of the K0 clutch 34 is increased at a predetermined gradient and is put into the complete engagement at a predetermined timing of having a certain level of torque. When the K0 clutch 34 has a predetermined torque so that the racing-up of the engine rotation speed NE is prevented (time t5), the torque replacement control of step S7 is started. Time t6 is the time when the torque replacement control is completed.

As described above, in the control at the start of the direct injection engine 12 by the engine start time control means 80 of this example, when the K0 clutch 34 is connected after the ignition start of the direct injection engine 12 is performed, the torque-down control of step S3 is provided and, as depicted in time chart of Fig. 4, the engine torque is reduced as the speed difference (NMG-NE) becomes smaller such that the engine torque TE is reduced as the engine rotation speed NE comes closer to the MG rotation speed NMG Particularly, the engine torque TE is reduced in proportion to the speed difference (NMG-NE) such that the engine rotation speed NE is maintained at a substantially constant value when the speed difference (NMG-NE) becomes substantially zero. Therefore, the racing-up of the direct injection engine 12 and the connection shock are suppressed regardless of deviation of the connection timing of the K0 clutch 34, and the drivability performance and the riding quality are improved. Since the engine torque TE is gradually reduced in accordance with the speed difference (NMG-NE), a stall etc. of the direct injection engine 12 due to inability of self-sustaining rotation is properly avoided as compared to the case of reducing the engine torque TE uniformly regardless of a change in the speed difference (NMG-NE) as in the torque-down control of Fig. 9, for example.

If the engine torque TE cannot be reduced in proportion to the speed difference (NMG-NE), i.e., if the limit torque TEst=K(NMG-NE) from the torque-down control of step S3 reaches the torque-down lower limit value TEmin that is the delayed lower limit torque, since the engine torque TE is controlled in accordance with the torque-down lower limit value TEmin as depicted in the time chart of Fig. 5 and the racing-up of the direct injection engine 12 is suppressed by the engagement torque (K0 torque) of the K0 clutch 34, the K0 clutch 34 can properly be connected so as not to generate the drive force variation while the racing-up of the direct injection engine 12 is suppressed.

If the engine torque TE cannot be reduced in proportion to the speed difference (NMG-NE) and the motor generator MG cannot regeneratively be controlled because the electric storage remaining amount SOC is equal to or greater than the full charge determination value SOCmax, as depicted in Fig. 7, the engine torque TE is subjected to the feedback control based on the engine rotation speed NE while the K0 clutch 34 is connected after waiting until the convergence state in which the cylinder internal air amount KL of the direct injection engine 12 becomes substantially the same as the target air amount KLt defined depending on the throttle valve opening degree and, therefore, even when the torque cannot be absorbed by the regenerative control with the motor generator MG, the K0 clutch 34 can properly be connected while the drive force variation is suppressed. In particular, since the surge tank pressure is the atmospheric pressure immediately after the engine start, the cylinder internal air amount KL is large, generating the larger engine torque TE; however, because the surge tank pressure turns to a negative pressure in an engine operating state, the cylinder internal air amount KL is reduced and a torque corresponding to the throttle valve opening degree (request output of a driver) is achieved and, therefore, if the K0 clutch 34 is connected in this state, a necessity to absorb an excess torque is eliminated.

Although the example of the present invention has been described in detail with reference to the drawings, this is merely an embodiment and the present invention can be implemented in variously modified and improved forms based on the knowledge of those skilled in the art.

### NOMENCLATURE OF ELEMENTS

10: hybrid vehicle 12: direct injection engine 34: K0 clutch (clutch) 70: electronic control device 80: engine start time control means 82: engine starting means 84: torque-down control means 86: clutch control means MG: motor generator (rotating machine) TE: engine torque NE: engine rotation speed NMG: MG rotation speed (power transmission path side rotation speed) NMG-NE: speed difference KL: cylinder internal air amount

## Claims

1. A control device of a hybrid vehicle for starting an engine, the hybrid vehicle having
a direct injection engine directly injecting fuel into a cylinder,
a clutch connecting/disconnecting the direct injection engine to/from a power transmission path, and
a rotating machine acting at least as an electric motor,
the hybrid vehicle being configured to run by concurrently or separately using the direct injection engine and the rotating machine as a drive force source and, the hybrid vehicle being configured to execute ignition start of the direct injection engine in which the direct injection engine is started by injecting and igniting fuel in a cylinder during stop of the direct injection engine, wherein
an engine torque is reduced based on a speed difference between an engine rotation speed and a rotation speed of a power transmission path side across the clutch when the speed difference is smaller as compared to the speed difference is larger such that the engine torque is reduced as the engine rotation speed comes closer to the rotation speed of the power transmission path side, when the clutch is connected after the ignition start of the direct injection engine is performed.

2. The control device of a hybrid vehicle for starting an engine of claim 1, wherein
if the engine torque cannot be reduced depending on the speed difference, the direct injection engine is restrained from racing up by an engagement torque of the clutch.

3. The control device of a hybrid vehicle for starting an engine of claim 1, wherein
if the engine torque cannot be reduced depending on the speed difference, an engagement of the clutch is waited until a stable state in which a cylinder internal air amount of the direct injection engine is defined depending on a throttle valve opening degree.

4. The control device of a hybrid vehicle for starting an engine of claim 1, wherein
when the clutch is connected after the ignition start of the direct injection engine is performed, the engine torque is reduced depending on the speed difference such that the engine torque is reduced as the engine rotation speed comes closer to the rotation speed of the power transmission path side across the clutch, and such that the engine rotation speed is maintained at a constant value when the speed difference becomes zero.
